# EUROPEAN PATENT SPECIFICATION

(11) **EP 2 194 770 B1**
(45) Date of publication and mention of the grant of the patent: **25.01.2012**
(21) Application number: 08782787.9
(22) Date of filing: 19.06.2008
(51) Int. Cl.: A01D 78/12

(54) **HAYMAKING IMPLEMENT FOR DISPLACING CROP LYING ON THE GROUND**
HEUWERBUNGSGERÄT ZUM VERSCHIEBEN VON AUF DEM BODEN LIEGENDEM ERNTEGUT
OUTIL DE FENAISON POUR DÉPLACER DES CULTURES REPOSANT SUR LE SOL

(30) Priority: 28.09.2007 NL 1034442
(43) Date of publication of application: 16.06.2010
(73) Proprietor: Lely Patent N.V., 3147 PA Maassluis (NL)
(72) Inventor: VAN DEN ENGEL, Alfonsus Jacobus, NL-3123 CM Schiedam (NL); VAN DER LELIJ, Bart, NL-3216 LG Abbenbroek (NL)
(74) Representative: Jennen, Peter Leonardus Hendricus
(86) International application number: PCT/NL2008/000152
(87) International publication number: WO 2009/041807

(56) References cited:
- EP-A- 0 285 537
- EP-A- 0 979 600
- CH-A- 479 997
- DE-U1- 9 311 671

## Description

The present invention relates to a haymaking implement for displacing crop lying on the ground according to the preamble of claim 1.

Such a haymaking implement is known, for example, from EP 0 979 600. This document discloses a haymaking implement comprising a rotor having arms which are rotatable about an associated pivot axis. Tines are fastened on the ends of these arms. The end of an arm is obliquely disposed relative to the inner portion. Owing to this, the outer side of the arm will be lifted to a greater extent than the inner side, so that an improved swath formation is obtained.

In practice, however, the swath formation is found still to be insufficient, more in particular, to be insufficiently accurate.

It is an objective of the invention to provide an implement of the type mentioned in the preamble by which an improved swath formation is obtained.

This is achieved by means of an implement which comprises the features of the characterizing part of claim 1. In particular, the invention provides a haymaking implement for displacing crop lying on the ground, comprising at least one rotor which is rotatable about an upwardly orientated axis in a first direction of rotation and which is provided with at least one tine arm, wherein the tine arm is pivotably fastened to the rotor about an associated pivot axis, wherein the tine arm comprises an inner arm portion and an outer arm portion having a plurality of tines, wherein the tine arm is mechanically controllable in such a manner that the position of the tines during operation varies cyclically between a gripping position for gripping and taking along crop lying on the ground and a release position for releasing the crop, wherein each tine comprises a tine portion having a tine point for contact with the crop, a fastening portion for fastening on the tine arm and a spring portion which forms a flexible connection of the fastening portion to the tine portion, characterized in that the outer arm portion is connected to the inner arm portion by means of a curve which is shaped in such a manner that, viewed in vertical projection, at least the inner tine point of the tine arm, in the gripping position, is located on or in front of the pivot axis when viewed in the first direction of rotation, while at least the outer tine point of the tine arm, in the gripping position, is located behind the pivot axis. In this case, by the pivot axis is meant the whole line about which the tine arm pivots, thus including the prolonged part thereof.

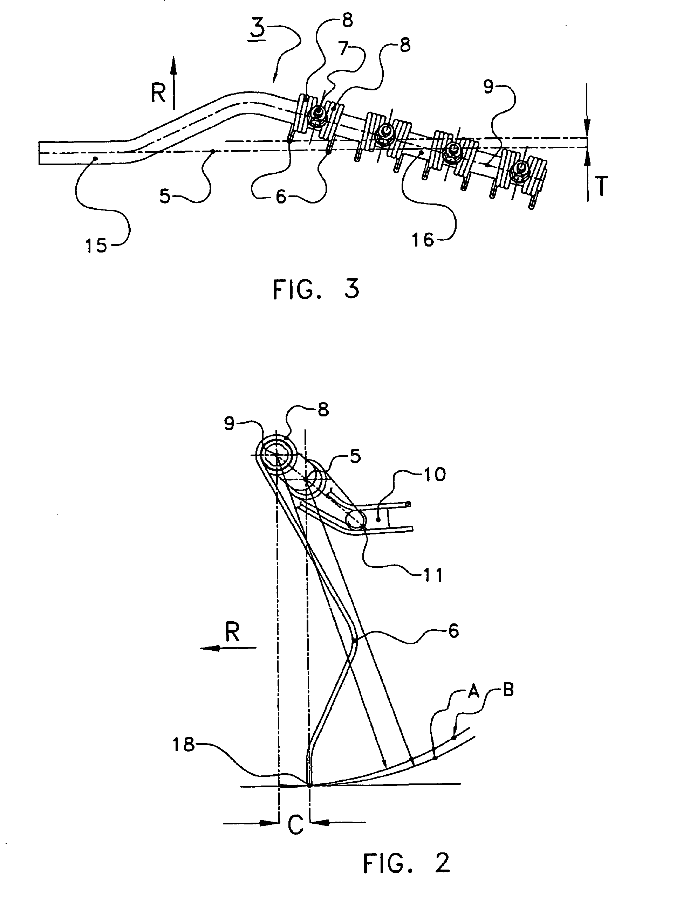

The advantage of such a haymaking implement, especially of such a tine arm construction, is that the control of in particular the inner tine points, i.e. the inner tines, improves, while the positive properties of the outer tine point(s) are maintained. It is found that the so-called curve path sensitivity of especially the inner tines has a great influence on the precision of the tines when releasing crop. All this will be explained below in further detail, also with reference to Figure 2 and its description.

In order to pivot the tine arm between the gripping position and the release position, there is usually applied a curve path, in which an end of the tine arm or a part connected thereto, such as a lever, is led. This curve path has a substantially flat part, for the gripping position, and an obliquely inclined part, for the release position, or inversely if desired. In order to prevent blows on the tine arm in the case of displacement, the transition between the two parts of the curve path is rounded. This means that there is a certain transition between the gripping position and the release position, wherein the end of the tine arm, or of the portion connected thereto, is located in the transition part of the curve path. Here, the tine arm will start pivoting. How quickly an effective release position of the tine is attained depends, in this case, on the position of the tine point relative to the pivot axis, viewed in vertical projection. If the tine point is located behind the vertical projection of the pivot axis, the point will rise relatively quickly, and will thus also release relatively quickly. By positioning the inner tine point, according to the invention, at least on or in front of the vertical projection of the pivot axis, said tine point will not or hardly rise in the beginning of the pivoting motion. When the end of the tine arm is located in the sharply rising part of the curve path, the pivoting motion will take place more quickly, and the effective release position will thus be attained more quickly. This means that the release accuracy for the tine(point) in question will increase. Especially for the inner tine(point) this is important, because the latter determines the inner boundary of the swath. For the outer tine(point) it holds that, if the exact moment of release is not known, this does not or hardly lead to problems in relation to release accuracy. For, this tine(point) will always release somewhere on the swath to be formed, while, moreover, a swath board will usually be provided at the outer side of the swath.

Favourable embodiments are described in the sub-claims. In particular, in the gripping position, the inner tine point of the tine arm is located in front of the pivot axis when viewed in the first direction of rotation. Hereby it is even better ensured that said inner tine point will not start to rise slowly already at the beginning of the pivoting motion. The tine point will even first move a little in the direction of the ground. However, this is not a problem owing to, inter alia, the resilient properties of the tines. It is pointed out here that the properties for the outer tine point may also hold for one or more neighbouring and more outwardly located tine points, of course to an extent that decreases with distance. The relative importance of an accurate release behaviour for the tines also decreases for more outward positions.

In particular, in the gripping position, for at least one of the tine points, and preferably for all the tine points, the incremental upward displacement in the case of rotation about the spring axis is greater than zero. If the tine hits an obstacle, such as a stone, the arm will deflect under spring pressure and rotate about the centre of the winding. This is called obstacle protection. Right at the first contact with an obstacle, such as a stone, the tine will react by rotation about the axis of symmetry of the spring and will perform as a result thereof an initial motion having a vertical upward component. As a result thereof, the tine will move upward quickly and it will easily be possible to avoid the obstacle.

In a preferred embodiment, in the gripping position, for at least one of the tine points, and preferably for all the tine points, the incremental upward displacement in the case of rotation about the spring axis is greater than in the case of rotation about the pivot axis. The obstacle protection is thus even more efficient than the pivoting motion about the pivot axis which will occur in any case, but later. The transition from the gripping position to the release position takes place by means of a rotation about the pivot axis. At the beginning of the pivoting motion, the motion of the tine point will have no vertical component or a much smaller vertical component. As a result thereof, at the transition to the release position, the tine point will maintain for a relatively long time substantially the same position as in the complete gripping position, and will subsequently pass very quickly to the release position. In fact, the obstacle protection and the rapid transition from the gripping position to the release position are thus effectively separated.

Viewed in the first direction of rotation, the centre of the spring portion of at least one of the tines is advantageously located in front of the pivot axis. This is a simple manner of ensuring that the incremental displacement of the tine point is orientated upwardly when an obstacle is met.

Viewed in the first direction of rotation, the centre of the spring portion of at least one of the tines may also be located higher than the pivot axis. A long, flexible tine point is then provided.

Advantageously, the distance between the tine point and the spring axis is smaller than the distance between the tine point and the pivot axis at the position of the tine point. In this, alternative, embodiment, there is, on the contrary, provided a relatively short tine which, however, in particular if the centre of the spring portion is positioned in front of the pivot axis, has an excellent obstacle protection.

In the above-mentioned embodiments, it is obvious that the pivot arm, in particular the curve and the tine arm portions, is designed in such a manner that the tine points are actually operative in the gripping position.

In particular, the spring portion is connected to the tine arm by means of a connecting piece, and the spring axis and the outer arm portion are located at a mutual distance of, preferably, at least the diameter of the spring portion. Thus, in this case, the spring portion does not surround the pivot arm. This provides even more possibilities of disconnecting the obstacle protection from the actual pivoting motion. Alternatively, the spring portion may surround the pivot arm, in which case the advantage of lesser contamination is provided. Moreover, in the case of breakage in the spring portion, the remaining parts will not come loose from the tine arm.

Furthermore, it is advantageous if the outer arm portion and the inner arm portion form an integral whole. This enables an inexpensive and simple production of the tine arm, starting from a tube.

In particular, the spring portions of two neighbouring tines form an integral whole. In such a construction, it is possible to connect a plurality of tines to the tine arm by means of one single fastening.

The invention will be explained hereinafter in detail with reference to drawings of exemplary embodiments.
Figure 1 is a side view of a haymaking implement according to the invention comprising a rotor having controlled arms;
Figure 2 is a side view of an arm of a haymaking implement according to the invention, and
Figure 3 is a top view of an arm of a haymaking implement according to the invention.

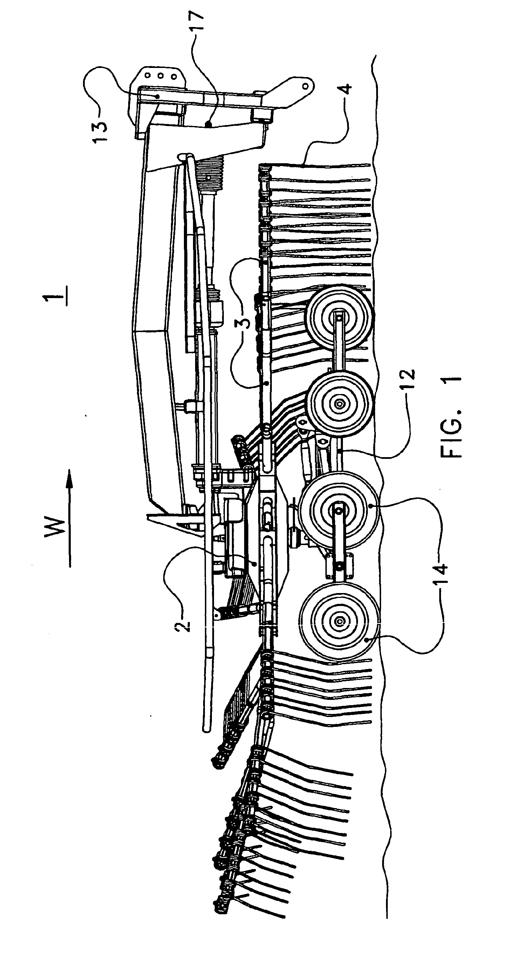

Figure 1 shows a haymaking implement 1 for displacing crop lying on the ground, comprising at least one rotor 2 which is rotatable about an upwardly orientated axis and which is provided with at least one tine arm 3, wherein the tine arm 3 is pivotably fastened to the rotor 2 about an associated pivot axis 5, wherein the tine arm 3 comprises an inner arm portion 15 and an outer arm portion 16 having a plurality of tines 4, wherein the tine arm 3 is mechanically controllable in such a manner that the position of the tines 4 during operation varies cyclically between a gripping position for gripping and taking along crop lying on the ground and a release position for releasing the crop, wherein each tine 4 comprises a tine portion 6 having a tine point 18 for contact with the crop, a fastening portion 7 for fastening on the tine arm 3 and a spring portion 8 which forms a flexible connection of the fastening portion 7 to the tine portion 6, wherein the outer arm portion 16 is connected to the inner arm portion 15 by means of a curve which is shaped in such a manner that, viewed in vertical projection, at least the inner tine point 18 of the tine arm 3 is located, in the gripping position, viewed in the first direction of rotation R, on or in front of the pivot axis 5, while at least the outer tine point 18 of the tine arm 3 is located, in the gripping position, behind the pivot axis 5. For the sake of clarity, not all the tines 4 are shown in this view. At the front side the haymaking implement 1 is fastened to a not shown tractor by means of a trestle 13. The rotor 2 is drivable via the tractor via the coupling shaft 17 and is supported on the ground via a wheel set 12 having a plurality of wheels 14. The haymaking implement 1 is of the so-called controlled type having one rotor. Viewed in the direction of operation W, at the front side of the rotor 2, the tines 4 are located vertically in the gripping position, while at the rear side the tines 4 are orientated substantially horizontally in the release position. When the rotor 2 is rotating, the crop lying on the ground at the front side is taken along by the tines 4 to the release side at the lateral side. At this release side, the tine arms 3 rotate in a more horizontal position to the release position and release the crop taken along into a swath.

Figure 2 shows a detail of the haymaking implement 1, namely the tine arm 3 to which a tine 4 is fastened. There is depicted a curve path 10 known per se in which a running wheel 11 runs. Owing to the fact that the running wheel 11 passes through the curve path 10 during rotation of the rotor 2, it transmits, in a manner known per se via a lever, a rotational motion to the tine arm 3 as a result of which the latter will pivot about the axis of rotation 5. The tine arm 3 comprises an inner arm portion 15 and an outer arm portion 16 (Figure 3), the inner arm portion 15 being at one side rotatably connected to the rotor 2 and being at the other side connected to the outer arm portion 16 to which the tine 4 is fastened and the outer arm portion 16 being disposed bevelledly relative to the inner arm portion 15. The components of the tine 4, i.e. the spring portion 8, the fastening portion 7 and the tine portion 6, are made of flexible steel so that it is possible for the tine to perform a rotational motion about the spring axis 9. In the embodiment shown, this spring axis 9 coincides with the axis of symmetry of the outer arm portion 15.

When the tine portion 6 comes into contact with an obstacle, such as a stone, the tine portion 6 will move rearward opposite to the direction of rotation R and rotate about the spring axis 9. In this case the tine point will pass through the curve B and gradually move upward. In the case of sufficient rearward deflection, the tine point will at a given moment be lifted to a sufficient extent to allow the obstacle to pass thereunder. This capacity to avoid an obstacle is called the obstacle protection.

During passing through the curve path 10 from the gripping position to the release position the tine arm 3 will pivot about the pivot axis 5 and pass through curve A. For a proper functioning of the haymaking implement 1 it is necessary to have the transition from the gripping position to the release position take place as abruptly as possible. This may take place by having curve A co-operate with the tine point position in such a manner that the transition from the horizontal portion to the oblique portion takes place when the incremental motion upon pivoting about the pivot axis is small. The quicker motion in the oblique part of the curve path will thus coincide with the part of the pivoting motion which has a relatively great incremental upward displacement. In the gripping position, viewed in the direction of rotation R of the rotor 2 and viewed transverse to the pivot axis 5, the tine point is aligned with the pivot axis 5. This is indicated by the vertical line through the pivot axis 5 and the tine point. This leads to the incremental displacement when entering the curve (see the position of the running wheel) being substantially zero and the tine point first still moving horizontally, which is advantageous to a relatively long gripping action.

As shown in Figure 2, the curve B is steeper in vertical direction than the curve A and the obstacle protection is relatively strong.

In vertical projection, the distance C between the spring axis 9 and the vertical plane through the pivot axis 5 for this tine point is greater than the inner radius of the spring portion 8. It has been found in practice that this distance ensures a sufficient difference between the curves A and B.

Figure 3 shows a particular embodiment of a tine arm 3 having four tines. In this case, the haymaking implement 1 comprises a second tine portion 6 which is fastened to the inner side of the rotor 2 and has a second tine point, which second tine point, in the gripping position, viewed in the direction of rotation R of the rotor 2 and viewed transverse to the pivot axis 5, is located on the pivot axis 5. The haymaking implement 1 further comprises a second tine portion 6 which is fastened to the inner side of the rotor 2 and has a second tine point, which second tine point, in the gripping position, viewed in the direction of rotation R of the rotor 2 and viewed transverse to the pivot axis 5, is located in front of the pivot axis 5. The spring axis 9 is at an angle to the perpendicular plane through the pivot axis 5. This angle is preferably between 5 and 20 degrees, and is more preferably approximately 15 degrees. In this construction, when moving from the gripping position to the release position, the inner tine point will initially move downward to some extent. However, the tine points which are the outer ones when viewed from the rotor axis, are located behind the pivot axis when viewed in the direction of rotation R. Owing to this, these tine points will move upward even more quickly. This prevents crop from being unwantedly taken along from the already deposited swath by these outer tine points. A second effect of the fact that the spring axis 9 is at an angle to the perpendicular plane through the pivot axis 5, is that the outer arm portion 16 is orientated obliquely upwardly to some extent in the release position, as shown in Figure 1. This ensures that the tines 4 will less quickly come into contact with the crop in the swath. This holds in particular for the outer tines, which is advantageous because a swath is usually highest at its outer side.

The invention is not limited to the described embodiment having one single rotor 2, but may comprise any number of rotors. In the case of a plurality of rotors, it may be advantageous to select the proportions in such a manner that the described effects are different per rotor 2. This may be necessary in the case that one rotor 2 should also displace the crop deposited by another rotor 2. Besides, the invention is not limited to the described tine having two identical tine portions 6, but the tine may also consist of one single tine portion 6 and of tine portions 6 which are different in shape and/or flexibility. The tine 4 may also be fastened to the tine arm 3 in such a manner that the spring portion 8 is positioned at some distance from the tine arm 3.

## Claims

1. Haymaking implement (1) for displacing crop lying on the ground, comprising at least one rotor (2) which is rotatable about an upwardly orientated axis in a first direction of rotation (R) and which is provided with at least one tine arm (3), wherein the tine arm (3) is pivotably fastened to the rotor (2) about an associated pivot axis (5), wherein the tine arm (3) comprises an inner arm portion (15) and an outer arm portion (16) having a plurality of tines (4), wherein the tine arm (3) is mechanically controllable in such a manner that the position of the tines (4) during operation varies cyclically between a gripping position for gripping and taking along crop lying on the ground and a release position for releasing the crop, wherein each tine (4) comprises a tine portion (6) having a tine point (18) for contact with the crop, a fastening portion (7) for fastening on the tine arm (3) and a spring portion (8) which forms a flexible connection of the fastening portion (7) to the tine portion (6), and wherein the outer arm portion is connected to the inner arm portion by means of a curve
**characterized in that** the curve is shaped in such a manner that, viewed in vertical projection, at least the inner tine point (18) of the tine arm (3), in the gripping position, is located on or in front of the pivot axis (5) when viewed in the first direction of rotation (R), while at least the outer tine point (18) of the tine arm (3), in the gripping position, is located behind the pivot axis (5).

2. Haymaking implement according to claim 1, **characterized in that**, in the gripping position, the inner tine point (18) of the tine arm (3) is located in front of the pivot axis (5) when viewed in the first direction of rotation (R).

3. Haymaking implement according to any one of the preceding claims, **characterized in that**, in the gripping position, for at least one of the tine points (18), and preferably for all the tine points (18), the incremental upward displacement in the case of rotation about the spring axis (9) is greater than zero.

4. Haymaking implement according to claim 3, **characterized in that**, in the gripping position, for at least one of the tine points (18), and preferably for all the tine points (18), the incremental upward displacement in the case of rotation about the spring axis (9) is greater than in the case of rotation about the pivot axis (5).

5. Haymaking implement according to claim 3 or 4, **characterized in that**, viewed in the first direction of rotation (R), the centre of the spring portion (8) of at least one of the tines (4) is located in front of the pivot axis (5).

6. Haymaking implement according to claim 5, **characterized in that**, viewed in the first direction of rotation (R), the centre of the spring portion (8) of at least one of the tines (4) is located higher than the pivot axis (5).

7. Haymaking implement according to any one of the preceding claims, **characterized in that** the distance between the tine point (18) and the spring axis is smaller than the distance between the tine point (18) and the pivot axis at the position of the tine point (18).

8. Haymaking implement according to any one of claims 3-5, **characterized in that** the spring portion is connected to the pivot arm (3) by means of a connecting piece, and **in that** the spring axis and the outer arm portion are located at a mutual distance of, preferably, at least the diameter of the spring portion (8).

## Patentansprüche

1. Heuwerbungsgerät (1) zum Verlagern von auf dem Boden liegenden Erntegut, umfassend wenigstens einen Rotor (2), welcher um eine nach oben ausgerichtete Achse in eine erste Rotationsrichtung (R) drehbar ist und welcher mit wenigstens einem Zinkenarm (3) ausgestattet ist, wobei der Zinkenarm (3) drehbar um eine zugeordnete Rotationsachse (5) am Rotor (2) befestigt ist, wobei der Zinkenarm (3) einen inneren Armabschnitt (15) und einen äußeren Armabschnitt (16) mit einer Mehrzahl von Zinken (4) umfasst, wobei der Zinkenarm (3) mechanisch auf solch eine Weise steuerbar ist, dass die Position der Zinken (4) während des Arbeitsbetriebs zyklisch zwischen einer Eingriffsposition zum Ergreifen und Mitnehmen von Erntegut, welches auf dem Boden liegt, und einer Abwurfposition zum Loslassen des Ernteguts wechselt, wobei jede Zinke (4) einen Zinkenabschnitt (6) aufweist, welcher eine Zinkenspitze (18) für den Kontakt mit dem Erntegut, einen Befestigungsabschnitt (7) zum Befestigen am Zinkenarm (3) und einen Federabschnitt (8) besitzt, welcher eine biegsame Verbindung des Befestigungsabschnitts (7) zum Zinkenabschnitt (6) ausbildet, und wobei der äußere Armabschnitt mit dem inneren Armabschnitt mittels eines Bogens verbunden ist,
**dadurch gekennzeichnet, dass** der Bogen so geformt ist, dass in vertikaler Ansicht wenigstens die innere Zinkenspitze (18) des Zinkenarms (3) in der Eingriffsposition auf oder vor der Rotationsachse (5) angeordnet ist, wenn in der ersten Rotationsrichtung (R) betrachtet, während wenigstens die äußere Zinkenspitze (18) des Zinkenarms (3) in der Eingriffsposition hinter der Rotationsachse (5) angeordnet ist.

2. Heuwerbungsgerät nach Anspruch 1,
**dadurch gekennzeichnet, dass** in der ersten Rotationsrichtung (R) betrachtet die innere Zinkenspitze (18) des Zinkenarms (3) in der Eingriffsposition vor der Rotationsachse (5) angeordnet ist.

3. Heuwerbungsgerät nach einem der vorhergehenden Ansprüche,
**dadurch gekennzeichnet, dass** in der Eingriffsposition für wenigstens eine der Zinkenspitzen (18) und vorzugsweise für alle Zinkenspitzen (18) der inkrementale Versatz nach oben im Falle der Rotation um die Federachse (9) größer als null ist.

4. Heuwerbungsgerät nach Anspruch 3,
**dadurch gekennzeichnet, dass** in der Eingriffsposition für wenigstens eine der Zinkenspitzen (18) und vorzugsweise für alle Zinkenspitzen (18) der inkrementale Versatz nach oben im Falle der Rotation um die Federachse (9) größer ist als im Falle der Rotation um die Rotationsachse (5).

5. Heuwerbungsgerät nach Anspruch 3 oder 4,
**dadurch gekennzeichnet, dass** in der Rotationsrichtung (R) betrachtet das Zentrum des Federabschnitts (8) von wenigstens einer der Zinken (4) vor der Rotationsachse (5) angeordnet ist.

6. Heuwerbungsgerät nach Anspruch 5,
**dadurch gekennzeichnet, dass** in der Rotationsrichtung (R) betrachtet das Zentrum des Federabschnitts (8) von wenigstens einer der Zinken (4) höher als die Rotationsachse (5) angeordnet ist.

7. Heuwerbungsgerät nach einem der vorhergehenden Ansprüche,
**dadurch gekennzeichnet, dass** der Abstand zwischen der Zinkenspitze (18) und der Federachse kleiner ist als der Abstand zwischen der Zinkenspitze (18) und der Rotationsachse an der Position der Zinkenspitze (18).

8. Heuwerbungsgerät nach einem der Ansprüche 3 bis 5,
**dadurch gekennzeichnet, dass** der Federabschnitt mit dem Rotationsarm (3) mittels eines Verbindungsstücks verbunden ist und dass die Federachse und der äußere Armabschnitt mit einem gegenseitigen Abstand von vorzugsweise wenigstens dem Durchmesser des Federabschnitts (8) angeordnet sind.

## Revendications

1. Outil de fenaison (1) destiné à déplacer une récolte qui repose sur le sol, comprenant au moins un rotor (2) qui peut tourner autour d'un axe orienté vers le haut dans un premier sens de rotation (R) et qui est doté d'au moins un bras à dents (3), dans lequel le bras à dents (3) est fixé de manière pivotante sur le rotor (2) autour d'un axe de pivotement associé (5), dans lequel le bras à dents (3) comprend une partie bras intérieur (15) et une partie bras extérieur (16) présentant une pluralité de dents (4), dans lequel le bras à dents (3) peut être commandé de manière mécanique de telle façon que la position des dents (4) varie en fonctionnement de manière cyclique entre une position de préhension destinée à saisir et à rassembler la récolte qui repose sur le sol et une position de libération destinée à libérer la récolte, dans lequel chaque dent (4) comprend une partie dent (6) qui présente une pointe de dent (18) destinée à entrer en contact avec la récolte, une partie fixation (7) destinée à une fixation sur le bras à dents (3) et une partie ressort (8) qui forme une connexion flexible de la partie fixation (7) sur la partie dent (6), et dans laquelle la partie bras extérieur est reliée à la partie bras intérieur au moyen d'une courbe,
**caractérisé en ce que** la courbe présente une forme telle que, quand on regarde en projection verticale, au moins la pointe de dent intérieure (18) du bras à dents (3), dans la position de préhension, se situe sur ou devant l'axe de pivotement (5) quand on regarde dans le premier sens de rotation (R), alors qu'au moins la pointe de dent extérieure (18) du bras à dents (3), dans la position de préhension, se situe derrière l'axe de pivotement (5).

2. Outil de fenaison selon la revendication 1, **caractérisé en ce que**, dans la position de préhension, la pointe de dent intérieure (18) du bras à dents (3) se situe devant l'axe de pivotement (5) quand on regarde dans le premier sens de rotation (R).

3. Outil de fenaison selon l'une quelconque des revendications précédentes, **caractérisé en ce que**, dans la position de préhension, pour l'une au moins des pointes de dent (18), et de préférence pour toutes les pointes de dents (18), le déplacement incrémentiel vers le haut, dans le cas d'une rotation autour de l'axe du ressort (9), est supérieur à zéro.

4. Outil de fenaison selon la revendication 3, **caractérisé en ce que**, dans la position de préhension, pour l'une au moins des pointes de dent (18), et de préférence pour toutes les pointes de dents (18), le déplacement incrémentiel vers le haut, dans le cas d'une rotation autour de l'axe du ressort (9), est plus grand que dans le cas d'une rotation autour de l'axe de pivotement (5).

5. Outil de fenaison selon la revendication 3 ou la revendication 4, **caractérisé en ce que**, quand on regarde dans le premier sens de rotation (R), le centre de la partie ressort (8) de l'une au moins des dents (4) se situe devant l'axe de pivotement (5).

6. Outil de fenaison selon la revendication 5, **caractérisé en ce que**, quand on regarde dans le premier sens de rotation (R), le centre de la partie ressort (8) de l'une au moins des dents (4) se situe plus haut que l'axe de pivotement (5).

7. Outil de fenaison selon l'une quelconque des revendications précédentes, **caractérisé en ce que** la distance entre la pointe de dent (18) et l'axe du ressort est plus petite que la distance entre la pointe de dent (18) et l'axe de pivotement à la position de la pointe de dent (18).

8. Outil de fenaison selon l'une quelconque des revendications 3 à 5, **caractérisé en ce que** la partie ressort est reliée au bras de pivotement (3) au moyen d'une pièce de connexion, et **en ce que** l'axe du ressort et la partie bras extérieur se situent à une distance mutuelle au moins égale, de préférence, au diamètre de la partie ressort (8).
